# EUROPEAN PATENT APPLICATION

(11) **EP 4 691 680 A1**
(43) Date of publication of application: **11.02.2026**
(21) Application number: 24889132.7
(22) Date of filing: 07.11.2024
(51) Int. Cl.: B23K 26/066, B23K 37/04, B23K 26/21, H01M 50/536

(54) **WELDING APPARATUS AND WELDING METHOD**

(30) Priority: 10.11.2023 KR 20230155078
(71) Applicant: LG Energy Solution, Ltd., Seoul 07335 (KR)
(72) Inventor: LEE, Jin Yong, Daejeon 34122 (KR); KIM, Sang Hun, Daejeon 34122 (KR); KIM, Jeong Yeon, Daejeon 34122 (KR); AN, Hye Ryeon, Daejeon 34122 (KR); HWANG, Sang Ho, Daejeon 34122 (KR); PARK, Bae Geon, Daejeon 34122 (KR)
(74) Representative: Goddar, Heinz J.
(86) International application number: PCT/KR2024/017474
(87) International publication number: WO 2025/100946

(57) **Abstract**

The present technology provides a welding apparatus configured to weld a workpiece, the welding apparatus including: a lower base with a lower guide rail; a lower mask jig configured to be moved along the lower guide rail; an upper base including an upper guide rail and provided on the lower base; an upper mask jig configured to be moved along the upper guide rail; and a laser supply head configured to emit a laser beam to the workpiece fixed while being inserted between the lower mask jig and the upper mask jig.

## Description

### [Technical Field]

The present invention relates to a welding apparatus and a welding method.

This application claims the benefit of priority based on Korean Patent Application No. 10-2023-0155078, filed on November 10, 2023, and the entire content of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. In general, a secondary battery has a structure in which an electrode assembly with electrodes and a separator stacked therein is embedded in a battery case. To electrically connect the electrodes of the electrode assembly, it is necessary to couple electrode tabs and couple the electrode tabs and an electrode lead. In this case, various methods, e.g., ultrasonic welding and laser welding, are used to couple the electrode tabs and couple the electrode tabs and the electrode lead.

### [Disclosure]

### [Technical Problem]

The present invention is directed to providing a welding apparatus and a welding method.

### [Technical Solution]

An aspect of the present invention provides a welding apparatus configured to weld a workpiece, including: a lower base with a lower guide rail; a lower mask jig configured to be moved along the lower guide rail; an upper base including an upper guide rail and provided on the lower base; an upper mask jig configured to be moved along the upper guide rail; and a laser supply head configured to emit a laser beam to the workpiece fixed while being inserted between the lower mask jig and the upper mask jig.

In example embodiments, each of the lower mask jig and the upper mask jig may extend in a first direction, the lower mask jig may be installed on the lower guide rail to be movable in the first direction, and the upper mask jig may be installed on the upper guide rail to be movable in the first direction.

In example embodiments, the lower mask jig may include a plurality of lower work regions partitioned in the first direction, the upper mask jig may include a plurality of upper work regions partitioned in the first direction, a length of each of the plurality of lower work regions in the first direction may be equal to or greater than a length of the workpiece in the first direction, and a length of each of the plurality of upper work regions in the first direction may be equal to or greater than the length of the workpiece in the first direction.

In example embodiments, the welding apparatus may further include a lower actuator configured to move the lower mask jig, and an upper actuator configured to move the upper mask jig.

In example embodiments, the lower actuator and the upper actuator may be configured to move the lower mask jig and the upper mask jig to align one of the plurality of work regions of the lower mask jig and one of the plurality of upper work regions of the upper mask jig.

In example embodiments, each of the lower actuator and the upper actuator may include a servo motor.

In example embodiments, the lower mask jig may include a support surface to be contact with the workpiece, the upper mask jig may include a support surface to be contact with the workpiece, and both a length of the support surface of the lower mask jig in the first direction and a length of the support surface of the upper mask jig in the first direction may be twice or more a length of the workpiece in the first direction.

In example embodiments, the length of the support surface of the lower mask jig in the first direction may be equal to the length of the support surface of the upper mask jig in the first direction.

In example embodiments, the upper mask jig is provided with a through-hole through which the laser beam passes.

In example embodiments, the workpiece may include an electrode tab and an electrode lead of a battery cell.

An aspect of the present invention provides a welding method including: mounting a lower mask jig including a plurality of lower work regions on a lower base and an upper base including a plurality of upper work regions on an upper base; aligning a first lower work region and a first upper work region at a work position, in which the first lower work region is one of the plurality of lower work regions of the lower mask jig, and the first upper work region is one of the plurality of upper work regions of the upper mask jig; performing first welding by emitting a laser beam to a workpiece fixed between the first lower work region of the lower mask jig and the first upper work region of the upper mask jig; moving the lower mask jig and the upper mask jig to align a second lower work region and a second upper work region, wherein the second lower work region is one of the other lower work regions of the lower mask jig, and the second upper work region is one of the other upper work regions of the upper mask jig; and performing second welding by emitting the laser beam to another workpiece fixed between the second lower work region of the lower mask jig and the second upper work region of the upper mask jig.

In example embodiments, the lower mask jig may be installed on the lower base to be movable in a first direction, the upper mask jig may be installed on the upper base to be movable in the first direction, the plurality of lower work regions of the lower mask jig may be partitioned in the first direction, and the plurality of upper work regions of the upper mask jig may be partitioned in the first direction.

In example embodiments, a length of each of the plurality of lower work regions in the first direction may be equal to or greater than a length of the workpiece in the first direction, and a length of each of the plurality of upper work regions in the first direction may be equal to or greater than the length of the workpiece in the first direction.

In example embodiments, movement of the lower mask jig in the first direction may be controlled by a lower actuator, and movement of the upper mask jig in the first direction may be controlled by an upper actuator.

In example embodiments, the workpiece may include an electrode lead and an electrode tab of a battery cell.

### [Advantageous Effects]

According to example embodiments of the present invention, each of a lower mask jig and an upper mask jig includes a plurality of work regions to be used to weld a workpiece and thus a replacement period of each of the lower and upper mask jig may increase, thus improving an equipment utility rate
Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a diagram illustrating a welding apparatus according to example embodiments of the present invention.
FIG. 2 is a cross-sectional view of a welding apparatus according to example embodiments of the present invention.
FIGS. 3A to 3E are diagrams illustrating a welding method according to example embodiments of the present invention.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

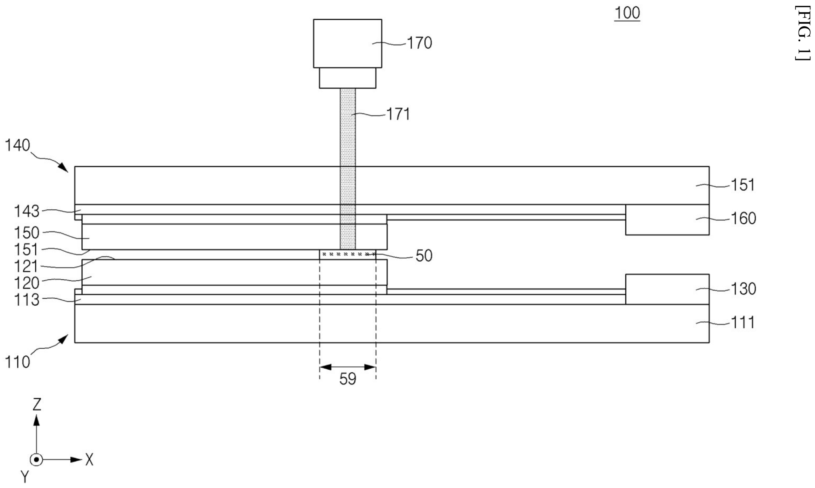

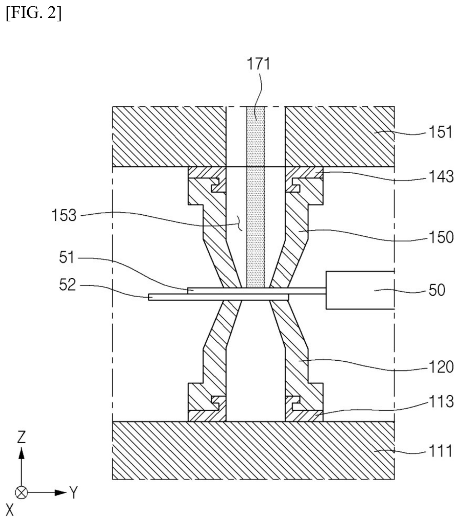

FIG. 1 is a diagram illustrating a welding apparatus 100 according to example embodiments of the present invention. FIG 2 is a cross-sectional view of the welding apparatus 100 according to example embodiments of the present invention.

Referring to FIGS. 1 and 2, the welding apparatus 100 may be a laser welding apparatus configured to emit a laser beam 171 to a workpiece 50 to laser-weld the workpiece 50. The welding apparatus 100 may include a lower base 110, a lower mask jig 120, an upper base 140, an upper mask jig 150, and a laser supply head 170.

The lower base 110 may support the lower mask jig 120. The lower base 110 may include a lower body 111 and a lower guide rail 113 mounted on the lower body 111.

The lower mask jig 120 may be mounted on the lower base 110. The lower mask jig 120 may support the workpiece 50. The lower mask jig 120 may include a support surface 121 in contact with the workpiece 50. The lower mask jig 120 and the support surface 121 of the lower mask jig 120 may extend in a first direction (e.g., an X-axis direction).

The lower mask jig 120 may be installed to be movable on the lower base 110. The lower mask jig 120 may be configured to be moved along the lower guide rail 113. The lower guide rail 113 may extend in the first direction (e.g., the X-axis direction), and the lower mask jig 120 may be moved along the lower guide rail 113 in the first direction (e.g., the X-axis direction).

In example embodiments, the welding apparatus 100 may include a lower actuator 130 configured to move the lower mask jig 120. The lower actuator 130 may move the lower mask jig 120 along the lower guide rail 113 and adjust a position of the lower mask jig 120 in the first direction (e.g., the X-axis direction). For example, the lower actuator 130 may include a servo motor and/or a step motor.

In some example embodiments, the lower mask jig 120 may be manually moved and the position thereof in the first direction (e.g., the X-axis direction) may be manually adjusted.

The upper base 140 may be on the lower base 110. The upper base 140 may support the upper mask jig 150. The upper base 140 may include an upper body 141 and an upper guide rail 143 mounted on the upper body 141.

The upper mask jig 150 may be mounted on the upper base 140 to face the lower mask jig 120. The upper mask jig 150 may be mounted on the upper base 140 to be aligned with the lower mask jig 120 in a vertical direction (e.g., a Z-axis direction). The upper mask jig 150 may press the workpiece 50 on the lower mask jig 120 in a downward direction. The upper mask jig 150 may include a support surface 151 in contact with the workpiece 50. The upper mask jig 150 and the support surface 151 of the upper mask jig 150 may extend in the first direction (e.g., the X-axis direction). A length of the support surface 121 of the lower mask jig 120 in contact with the workpiece 50 in the first direction (e.g., the X-axis direction) may be substantially the same as a length of the support surface 151 of the upper mask jig 150 in contact with the workpiece 50 in the first direction (e.g., the X-axis direction). The workpiece 50 may be fixed while being inserted between the lower mask jig 120 and the upper mask jig 150. More specifically, the workpiece 50 may be fixed between the support surface 121 of the lower mask jig 120 and the support surface 151 of the upper mask jig 150.

In example embodiments, the upper base 140 may be configured to be moved in the vertical direction (e.g., in the Z-axis direction) by an elevation actuator. A size of a gap between the upper mask jig 150 and the lower mask jig 120 may be adjusted by movement of the upper base 140 in the vertical direction (e.g., the Z-axis direction).

In example embodiments, the welding apparatus 100 may include an upper actuator 160 configured to move the upper mask jig 150. The upper actuator 160 may move the upper mask jig 150 along the upper guide rail 143 and adjust a position of the upper mask jig 150 in the first direction (e.g., the X-axis direction). For example, the upper actuator 160 may include a servo motor and/or a step motor.

In some example embodiments, the upper mask jig 150 may be manually moved, and the position of the upper mask jig 150 in the first direction (e.g., the X-axis direction) may be manually adjusted.

The laser supply head 170 may be provided on the upper base 140 and output the laser beam 171 to laser-weld the workpiece 50. The laser supply head 170 may include one or more light sources. While the workpiece 50 is fixed by being inserted between the lower mask jig 120 and the upper mask jig 150, the laser supply head 170 may emit the laser beam 171 to the workpiece 50 to weld the workpiece 50. The upper mask jig 150 may provide a through-hole 153 through which the laser beam 171 passes, and the upper base 140 may provide a hole through which the laser beam 171 passes. The upper guide rail 143 may be arranged not to interfere with the laser beam 171. A region of the workpiece 50 to be welded may overlap the through-hole 153 of the upper mask jig 150 in the vertical direction (e.g., the Z-axis direction). The laser beam 171 output from the laser supply head 170 may be emitted to the workpiece 50 through the hole of the upper base 140 and the through-hole 153 of the upper mask jig 150.

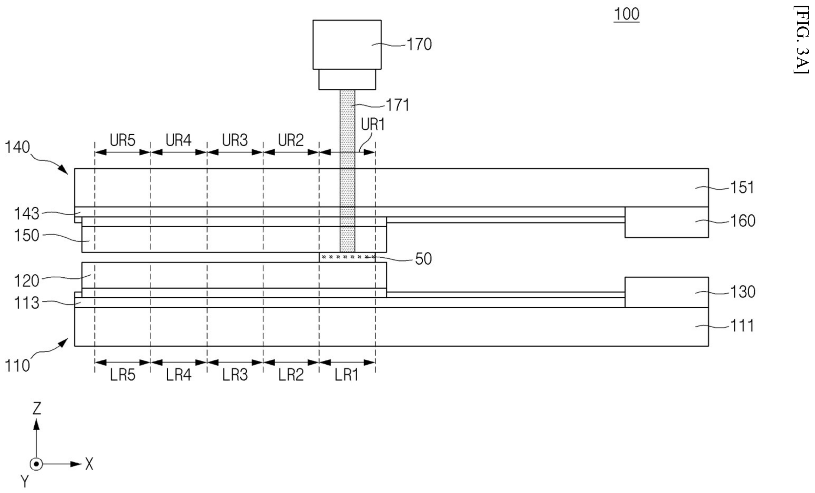

In example embodiments, the length of the support surface 121 of the lower mask jig 120 in the first direction (e.g., the X-axis direction) may be more than twice a length 59 of the workpiece 50 in in the first direction (e.g., the X-axis direction). In this case, different regions of the lower mask jig 120 may be used to weld the workpiece 50. Here, the length 59 of the workpiece 50 in the first direction (e.g., the X-axis direction) may be understood as a length of a part of the workpiece 50, which is fixed by being inserted between the lower mask jig 120 and the upper mask jig 150, in the first direction (e.g., the X-axis direction). In example embodiments, the lower mask jig 120 may include a plurality of lower work regions that are partitioned or spaced apart from each other in the first direction (e.g., the X-axis direction). For example, as illustrated in FIG. 3A, the lower mask jig 120 may include first to fifth lower work regions LR1, LR2, LR3, LR4, and LR5. A length of each of the lower work regions LR1 to LR5 in the first direction (e.g., the X-axis direction) may be equal to or greater than the length 59 of the workpiece 50 in the first direction (e.g., the X-axis direction).

In example embodiments, the length of the support surface 151 of the upper mask jig 150 in the first direction (e.g., the X-axis direction) may be more than twice the length 59 of the workpiece 50 in the first direction (e.g., the X-axis direction). In this case, different regions of the upper mask jig 150 may be used to weld the workpiece 50. In example embodiments, the upper mask jig 150 may include a plurality of upper work regions partitioned or spaced apart from each other in the first direction (e.g., the X-axis direction). For example, as shown in FIG. 3A, the upper mask jig 150 may include first to fifth upper work regions UR1, UR2, UR3, UR4, and UR5. A length of each of the upper work regions UR1 to UR5 in the first direction (e.g., the X-axis direction) may be equal to or greater than the length 59 of the workpiece 50 in the first direction (e.g., the X-axis direction).

In a general laser welding device, a mask jig used to fix a workpiece is a part on which spatter generated during laser welding is accumulated. When spatter is accumulated on the mask jig, a laser beam may interfere with the spatter, thus resulting in poor welding quality or the spatter may be attached to a workpiece, thus resulting in contamination of the workpiece. Therefore, the mask jig is required to be replaced with another when the mask jig is used for welding a certain number of times.

According to example embodiments of the present invention, after one of the plurality of lower work regions of the lower mask jig 120 and one of the plurality of upper work regions of the upper mask jig 150 are used to laser-weld the workpiece 50, one of the other lower work regions of the lower mask jig 120 that have yet to be used for laser welding and one of the other upper work regions of the upper mask jig 150 that have yet to be used for laser welding may be used to laser-weld the workpiece 50.

According to example embodiments of the present invention, each of the lower and upper mask jigs 120 and 150 has a plurality of work regions to be used to weld the workpiece 50 and thus a replacement period of each of the lower and upper mask jigs 120 and 150 may increase, thus improving an equipment utilization rate.

In example embodiments, the welding apparatus 100 may perform a welding process of battery cells of a secondary battery among secondary battery manufacturing processes. In this case, the workpiece 50 may include an electrode tab 51 and an electrode lead 52 of a battery cell, and the welding apparatus 100 may perform laser welding to fuse the electrode tab 51 of the battery cell to the electrode lead 52.

The battery cell is a basic unit of a lithium ion battery, i.e., a secondary battery. The battery cell may include an electrode assembly, an electrolyte, and a case (e.g., a pouch case). Battery cells are classified into a lithium ion battery, a lithium ion polymer battery, a lithium polymer battery, etc. according to a configuration of an electrode assembly and an electrolyte. A market share of lithium ion polymer batteries in the field of secondary battery is increasing due to a low possibility of leakage of an electrolyte and easiness in manufacturing.

The electrode assembly included in the case includes a positive electrode, a negative electrode, and a separator between the positive electrode and the negative electrode. The electrode assembly may be classified as a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

The positive electrode may include a positive electrode current collector and a positive electrode active material. The negative electrode may include a negative electrode current collector and a negative electrode active material. The positive electrode may include a positive electrode tab. The positive electrode tab is a part cut for the contact of an uncoated part of the positive electrode current collector. The negative electrode may include a negative electrode tab. The negative electrode tab is a part cut for the contact of an uncoated part of the negative electrode current collector. Here, the uncoated part is a part of the positive electrode current collector that is not coated with the positive electrode active material or a part of the negative electrode current collector that is not coated with the negative electrode active material.

The positive electrode current collector may not cause a chemical change in a finally manufactured secondary battery and may have high conductivity. The positive electrode current collector may include, for example, stainless steel, nickel, titanium, baked carbon, and aluminum. The positive electrode current collector may include stainless steel surface-treated with carbon, nickel, titanium, silver, or the like. The positive electrode active material is a material that may cause an electrochemical reaction. The positive electrode active material may be a lithium transition metal oxide.

The negative electrode current collector may not cause a chemical change in a finally manufactured secondary battery and may have high conductivity. The negative electrode current collector may include stainless steel, aluminum, nickel, titanium, baked carbon, and aluminum-cadmium alloy. The negative electrode current collector may include stainless steel surface-treated with carbon, nickel, titanium, silver, or the like. A negative electrode active material may include, for example, carbon such as non-graphitized carbon or graphitebased carbon.

### (Second Embodiment)

FIGS. 3A to 3E are diagrams illustrating a welding method according to example embodiments of the present invention. Hereinafter, a welding method using the welding apparatus 100 described above with reference to FIGS. 1 and 2 will be described with reference to FIGS. 3A to 3E below.

Referring to FIG. 3A, the lower mask jig 120 is mounted on the lower base 110, and the upper mask jig 150 is mounted on the upper base 140. The lower mask jig 120 may be installed to be movable on the lower guide rail 113 of the lower base 110, and the upper mask jig 150 may be installed to be movable on the upper guide rail 143 of the upper base 140.

For example, the lower mask jig 120 may include the first to fifth lower work regions LR1, LR2, LR3, LR4, and LR5 that are partitioned in the first direction (e.g., the X-axis direction), and the upper mask jig 150 may include the first to fifth upper work regions UR1, UR2, UR3, UR4, and UR5 that are partitioned in the first direction (e.g., the X-axis direction). The number of lower work regions of the lower mask jig 120 and the number of upper work regions of the upper mask jig 150 are not limited to five and may each be two or more.

Next, the first lower work region LR1 of the lower mask jig 120 and the first upper work region UR1 of the upper mask jig 150 are aligned at a work position. The work position may be a position to which the laser beam 171 output from the laser supply head 170 is emitted. A position of the lower mask jig 120 in the first direction (e.g., the X-axis direction) and the position of the upper mask jig 150 in the first direction (e.g., the X-axis direction) may be adjusted to align the first lower work region LR1 of the lower mask jig 120 and the first upper work region UR1 of the upper mask jig 150 at the work position. In example embodiments, a lower driving motor and an upper driving motor may move the lower mask jig 120 and the upper mask jig 150 to align the first lower work region LR1 of the lower mask jig 120 and the first upper work region UR1 of the upper mask jig 150 at the work position.

Next, the workpiece 50 is fixed between the first lower work region LR1 of the lower mask jig 120 and the first upper work region UR1 of the upper mask jig 150, and the laser beam 171 is emitted to the workpiece 50 to perform first welding on the workpiece 50.

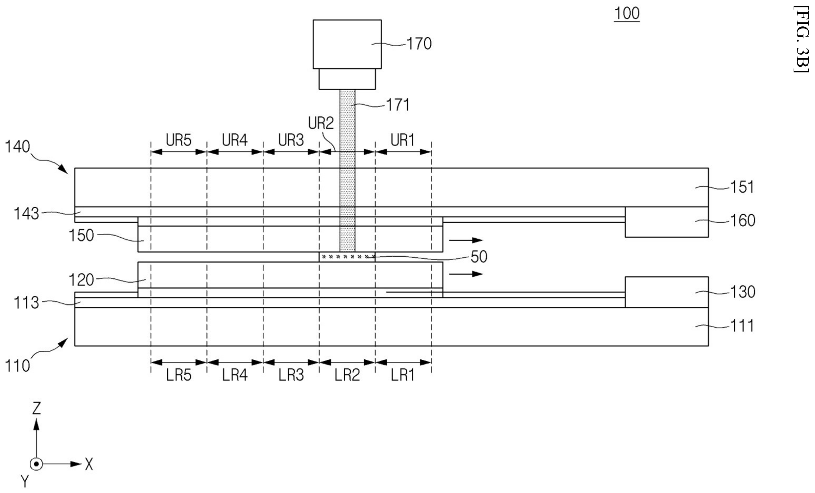

Referring to FIG. 3B, after the first welding is performed a plurality of times, the position of the lower mask jig 120 in the first direction (e.g., the X-axis direction) and the position of the upper mask jig 150 in the first direction (e.g., the X-axis direction) may be adjusted to align the second lower work region LR2 of the lower mask jig 120 and the second upper work region UR2 of the upper mask jig 150 at the work position. In example embodiments, the lower driving motor and the upper driving motor may move the lower mask jig 120 and the upper mask jig 150 to align the second lower work region LR2 of the lower mask jig 120 and the second upper work region UR2 of the upper mask jig 150 at the work position.

Next, a workpiece 50 is fixed between the second lower work region LR2 of the lower mask jig 120 and the second upper work region UR2 of the upper mask jig 150, and the laser beam 171 is emitted to the workpiece 50 to perform second welding on the workpiece 50. The workpiece 50 welded by the second welding may be different from the workpiece 50 welded by the first welding.

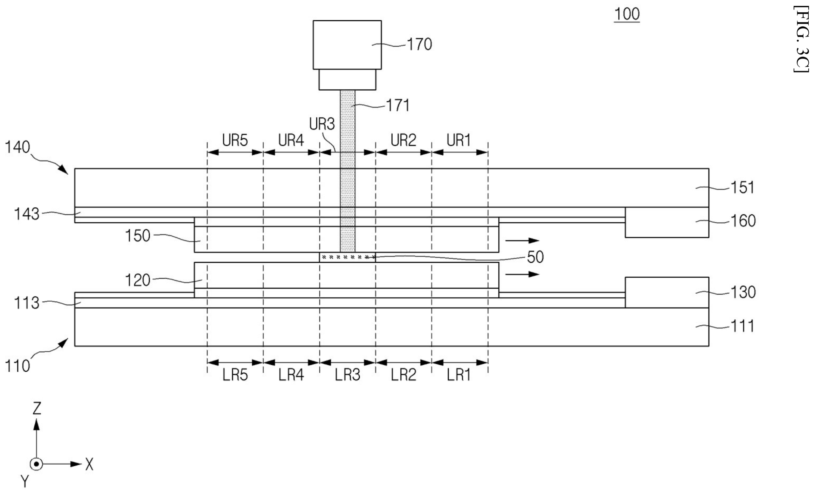

Referring to FIG. 3C, after the second welding is performed a plurality of times, the position of the lower mask jig 120 in the first direction (e.g., the X-axis direction) and the position of the upper mask jig 150 in the first direction (e.g., the X-axis direction) may be adjusted to align the third lower work region LR3 of the lower mask jig 120 and the third upper work region UR3 of the upper mask jig 150 at the work position. In example embodiments, the lower driving motor and the upper driving motor may move the lower mask jig 120 and the upper mask jig 150 to align the third lower work region LR3 of the lower mask jig 120 and the third upper work region UR3 of the upper mask jig 150 at the work position.

Next, a workpiece 50 is fixed between the third lower work region LR3 of the lower mask jig 120 and the third upper work region UR3 of the upper mask jig 150, and the laser beam 171 is emitted to the workpiece 50 to perform third welding on the workpiece 50. The workpiece 50 welded by the third welding may be different from the workpiece 50 welded by the second welding.

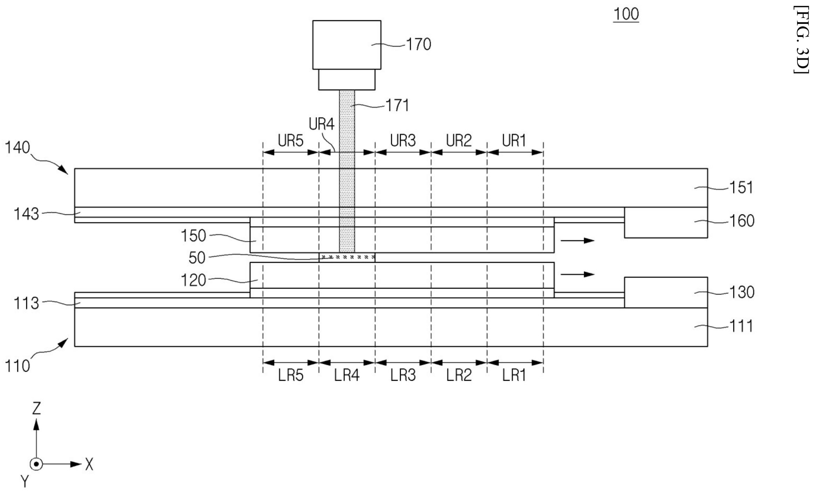

Referring to FIG. 3D, after the third welding is performed a plurality of times, the position of the lower mask jig 120 in the first direction (e.g., the X-axis direction) and the position of the upper mask jig 150 in the first direction (e.g., the X-axis direction) may be adjusted to align the fourth lower work region LR4 of the lower mask jig 120 and the fourth upper work region UR4 of the upper mask jig 150 at the work position. In example embodiments, the lower driving motor and the upper driving motor may move the lower mask jig 120 and the upper mask jig 150 to align the fourth lower work region LR4 of the lower mask jig 120 and the fourth upper work region UR4 of the upper mask jig 150 at the work position.

Next, a workpiece 50 is fixed between the fourth lower work region LR4 of the lower mask jig 120 and the fourth upper work region UR4 of the upper mask jig 150, and the laser beam 171 is emitted to the workpiece 50 to perform fourth welding on the workpiece 50. The workpiece 50 welded by the fourth welding may be different from the workpiece 50 welded by the third welding.

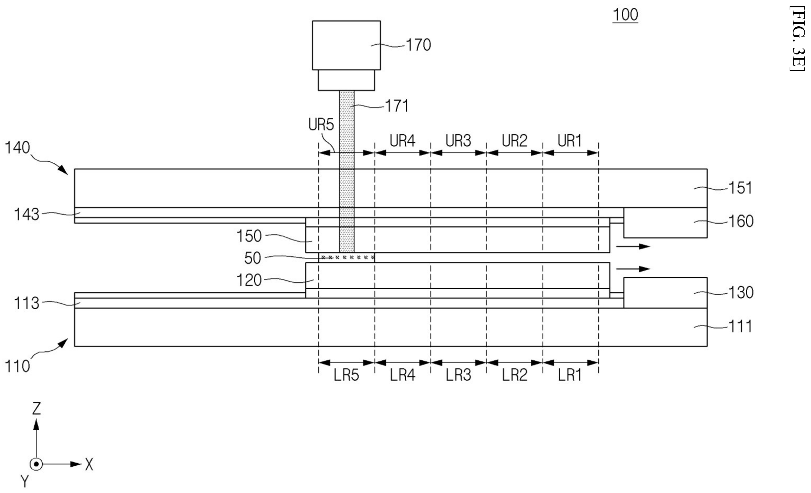

Referring to FIG. 3E, after the fourth welding is performed a plurality of times, the position of the lower mask jig 120 in the first direction (e.g., the X-axis direction) and the position of the upper mask jig 150 in the first direction (e.g., the X-axis direction) may be adjusted to align the fifth lower work region LR5 of the lower mask jig 120 and the fifth upper work region UR5 of the upper mask jig 150 at the work position. In example embodiments, the lower driving motor and the upper driving motor may move the lower mask jig 120 and the upper mask jig 150 to align the fifth lower work region LR5 of the lower mask jig 120 and the fifth upper work region UR5 of the upper mask jig 150 at the work position.

Next, a workpiece 50 is fixed between the fifth lower work region LR5 of the lower mask jig 120 and the fifth upper work region UR5 of the upper mask jig 150, and the laser beam 171 is emitted to the workpiece 50 to perform fifth welding on the workpiece 50. The workpiece 50 welded by the fifth welding may be different from the workpiece 50 welded by the fourth welding.

Next, after the fifth welding is performed a plurality of times, the lower mask jig 120 may be removed from the lower base 110 and the upper mask jig 150 may be removed from the upper base 140. Thereafter, a new lower mask jig 120 may be mounted on the lower base 110 and a new upper mask jig 150 may be mounted on the upper base 140, and a welding process may be performed.

According to example embodiments of the present invention, each of the lower and upper mask jigs 120 and 150 has a plurality of work regions to be used to weld the workpiece 50 and thus a replacement period of each of the lower and upper mask jigs 120 and 150 may increase, thus improving an equipment utilization rate.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A welding apparatus configured to weld a workpiece, comprising:
a lower base with a lower guide rail;
a lower mask jig configured to be moved along the lower guide rail;
an upper base including an upper guide rail and provided on the lower base;
an upper mask jig configured to be moved along the upper guide rail; and
a laser supply head configured to emit a laser beam to the workpiece fixed while being inserted between the lower mask jig and the upper mask jig.

2. The welding apparatus of claim 1, wherein
each of the lower mask jig and the upper mask jig extends in a first direction,
the lower mask jig is installed on the lower guide rail to be movable in the first direction, and
the upper mask jig is installed on the upper guide rail to be movable in the first direction.

3. The welding apparatus of claim 2, wherein
the lower mask jig comprises a plurality of lower work regions partitioned in the first direction,
the upper mask jig comprises a plurality of upper work regions partitioned in the first direction,
a length of each of the plurality of lower work regions in the first direction is equal to or greater than a length of the workpiece in the first direction, and
a length of each of the plurality of upper work regions in the first direction is equal to or greater than the length of the workpiece in the first direction.

4. The welding apparatus of claim 3, further comprising:
a lower actuator configured to move the lower mask jig; and
an upper actuator configured to move the upper mask jig.

5. The welding apparatus of claim 4, wherein
the lower actuator and the upper actuator are configured to move the lower mask jig and the upper mask jig to align one of the plurality of work regions of the lower mask jig and one of the plurality of upper work regions of the upper mask jig.

6. The welding apparatus of claim 4, wherein
each of the lower actuator and the upper actuator comprises a servo motor.

7. The welding apparatus of claim 2, wherein
the lower mask jig includes a support surface to be contact with the workpiece,
the upper mask jig includes a support surface to be contact with the workpiece, and
both a length of the support surface of the lower mask jig in the first direction and a length of the support surface of the upper mask jig in the first direction are twice or more a length of the workpiece in the first direction.

8. The welding apparatus of claim 7, wherein
the length of the support surface of the lower mask jig in the first direction is equal to the length of the support surface of the upper mask jig in the first direction.

9. The welding apparatus of claim 1, wherein
the upper mask jig is provided with a through-hole through which the laser beam passes.

10. The welding apparatus of claim 1, wherein
the workpiece comprises an electrode tab and an electrode lead of a battery cell.

11. A welding method comprising:
mounting a lower mask jig including a plurality of lower work regions on a lower base, and an upper base including a plurality of upper work regions on an upper base;
aligning a first lower work region and a first upper work region at a work position, wherein the first lower work region is one of the plurality of lower work regions of the lower mask jig, and the first upper work region is one of the plurality of upper work regions of the upper mask jig;
performing first welding by emitting a laser beam to a workpiece fixed between the first lower work region of the lower mask jig and the first upper work region of the upper mask jig;
moving the lower mask jig and the upper mask jig to align a second lower work region and a second upper work region, wherein the second lower work region is one of the other lower work regions of the lower mask jig, and the second upper work region is one of the other upper work regions of the upper mask jig; and
performing second welding by emitting the laser beam to another workpiece fixed between the second lower work region of the lower mask jig and the second upper work region of the upper mask jig.

12. The welding method of claim 11, wherein
the lower mask jig is installed on the lower base to be movable in a first direction,
the upper mask jig is installed on the upper base to be movable in the first direction,
the plurality of lower work regions of the lower mask jig are partitioned in the first direction, and
the plurality of upper work regions of the upper mask jig are partitioned in the first direction.

13. The welding method of claim 12, wherein
a length of each of the plurality of lower work regions in the first direction is equal to or greater than a length of the workpiece in the first direction, and
a length of each of the plurality of upper work regions in the first direction is equal to or greater than the length of the workpiece in the first direction.

14. The welding method of claim 12, wherein
movement of the lower mask jig in the first direction is controlled by a lower actuator, and
movement of the upper mask jig in the first direction is controlled by an upper actuator.

15. The welding method of claim 11, wherein
the workpiece comprises an electrode lead and an electrode tab of a battery cell.
